# EUROPÄISCHE PATENTSCHRIFT

(11) **EP 0 325 212 B1**
(45) Veröffentlichungstag und Bekanntmachung des Hinweises auf die Patenterteilung: **13.04.1994**
(21) Anmeldenummer: 89100736.1
(22) Anmeldetag: 17.01.1989
(51) Int. Cl.: B23C 5/24, B23B 29/034

(54) **Messerkopf**
Milling head
Tête de fraisage

(30) Priorität: 19.01.1988 DE 3801394
(43) Veröffentlichungstag der Anmeldung: 26.07.1989
(73) Patentinhaber: ENTWICKLUNGSZENTRUM FÜR ZERSPANUNGSTECHNIK GMBH & CO. KG, D-77933 Lahr (DE)
(72) Erfinder: Kieninger, Walter, D-7630 Lahr (DE)
(74) Vertreter: Grünecker, Kinkeldey, Stockmair & Schwanhäusser Anwaltssozietät

(56) Entgegenhaltungen:
- EP-A- 0 109 369
- EP-A- 0 126 432
- EP-A- 0 182 290
- DE-C- 880 838
- FR-A- 1 552 800
- US-A- 3 918 333

## Beschreibung

Die Erfindung betrifft einen Messerkopf gemäß Oberbegriff von Patentanspruch 1; siehe EP-A 0 126 432.

In der spanenden Metallverarbeitung werden,einhergehend mit der Entwicklung verschleißarmer Schneidstoffe zur Verringerung der Stückzeiten zunehmend höhere Schnittgeschwindigkeiten angewandt. Messerköpfe für die Ausführung von Fräsarbeiten, die mit Hartmetallschneiden bzw. Schneidplattenträgern bestückt sind, sind dabei bezüglich ihrer Schneidelemente im Verhältnis zum Grundkörper nachstellbar. Die axiale und/oder radiale Nachstellung der Schneidplattenträger zur Gewährleistung einer hohen Werkzeuggenauigkeit muß mit höchster Präzision möglich sein, da die Verschleißarmut der Schneidelemente und Schneidplatten Einstellmöglichkeiten im µm-Bereich bezüglich Rund- und Planlauf des Messerkopfes erfordert. Zugleich muß sichergestellt werden, daß sich die Lage der Schneiden bzw. der Schneidplattenträger unter dem Einfluß der Zerspanungskräfte während des Einsatzes des Messerkopfes nicht ändert und auch die bei hohen Werkzeugdrehzahlen beachtlichen Zentripedalkräfte nicht zu Ungenauigkeiten der Werkzeugabmessungen führen.

Zugleich soll die Nachstellbarkeit der Schneidkörper mit hoher Genauigkeit auf möglichst unkomplizierte Weise möglich sein.

Bei einem aus der DE-OS 35 30 745 bekannten Messerkopf wird eine Axialverstellung der in Ausnehmungen des Grundkörpers des Messerkopfes eingesetzten Schneidplattenträger jeweils eine Differentialschraube mit Links- und Rechtsgewinde verwendet. Die Radialverstellung des Schneidplattenträgers erfordert dessen Lagerung in einem Käfig, der mit Hilfe zweier wechselweise betätigbarer Einstellschrauben verschwenkbar ist. Diese Einstellanordnung weist daher in ihrer praktischen Anwendung noch nicht die für alle Einsatzbedingungen wünschenswerte Einfachheit auf.

Der Erfindung liegt daher die Aufgabe zugrunde, einen Messerkopf der eingangs genannten Art zu schaffen, bei dem auf unkoplizierte Weise eine Radial- oder Axialnachstellung der Schneidelemente des Messerkopfes zur Gewährleistung eines extakten Werkzeugmaßes möglich und eine sichere Positionierung der Scheidelemente am Grundkörper des Messerkopfes während des Bearbeitungsvorganges geleistet ist.

Diese Aufgabe wird erfindungsgemäß an einem Messerkopf gemäß Oberbegriff von Patentanspruch 1 durch seine kennzeichnenden Merkmale gelöst.

Eine bevorzugte Ausführungsform der Erfindung,die eine stufenlose radiale und axiale Nachstellung jedes Schneidplattenträgers und damit der jeweiligen mit diesem verbundenen Schneidplatte ermöglicht, zeichnet sich dadurch aus, daß die Exzenterhülse eine zu ihrer Mantelfläche exzentrische Innenbohrung aufweist, in der der Führungsschaft des Schneidplattenträgers in einer Spielpassung aufgenommen ist. Ferner ist die Exzenterhülse in einer Spielpassung in einer Grundbohrung des Grundkörpers drehbeweglich aufgenommen, greift in die Exzenterhülse ein Fixierbolzen ein und ist die Exzenterhülse axial federnd vorgespannt im Grundkörper des Messerkopfs aufgenommen.

Zum Zwecke einer axialen Lagefixierung in dem Grundkörper bei gleichzeitiger Ermöglichung einer Verstellung in Umfangsrichtung ist die Exzenterhülse mit einem ersten, sich in Umfangsrichtung erstreckenden Schlitz, in den ein den Grundkörper radial durchsetzender Fixierbolzen eingreift, versehen. Zum Angriff eines Keil-Verspannelementes an dem Führungsschaft des Schneidplattenträgers zur Festlegung desselben gemeinsam mit der Exzenterhülse in dem Grundkörper ist axial und in Umfangsrichtung versetzt an der Exzenterhülse ein weiterer sich in Umfangsrichtung erstreckender Schlitz vorgesehen, durch den hindurch ein den Grundkörper radial durchsetzender Keilbolzen zur Anlage an eine Gegenkeilfläche des Führungsschaftes des Schneidplattenträgers gebracht ist.

Zur einfachen Ausführbarkeit einer Drehung der Exzenterhülse in Umfangsrichtung zum Zwecke der Radialverstellung des jeweiligen Schneidplattenträgers besitzt die Exzenterhülse vorzugsweise im montierten Zustand einen sich bis in den Bereich der Stirnfläche des Grundkörpers erstreckenden Lappen mit einer Eingriffsnut zum Ansatz eines für die Drehverstellung der Exzenterhülse ansetzbaren Werkzeuges.

Eine vorteilhafte Ausgestaltung der erfindungsgemäßen Axialverstellung für den Schneidplattenträger einer zugehörigen Schneidplatte wird dadurch erreicht, daß der Schneidplattenträger an seinem, der Schneidplattenaufnahme abgewandten gegenüberliegenden Ende mit einem erweiterten Innengewindeabschnitt einer axialen Gewindebohrung versehen ist, in den von unten eine Stellschraube eingreift, die zugleich als Gegenlager für eine zwischen Schraubenkopf und einer Stirnfläche der Exzenterhülse vorgespannte Tellerfeder bildet die zum Spielausgleich zwischen der Exzenterhülse und deren Fixierbolzen dient. Der Schraubenkopf liegt am Boden der Aufnahmegrundbohrung auf. Zur Betätigung der Stellschraube bei montiertem Schneidplattenträger ist diese in der Stirnfläche des Gewindeschaftes mit einem Innensechskant versehen, in den von außen her durch die axiale Gewindebohrung des Schneidplattenträgers hindurch ein Imbusschlüssel einsetzbar ist.

Zum Ausgleich möglicher Unwucht sind vorzugsweise Gewindestifte unterschiedlicher Länge und/oder Dichte von außen in die axiale Gewindebohrung des jeweiligen Schneidplattenträgers einschraubbar.

Die Erfindung wird nachstehend anhand von Ausführungsbeispielen und zugehörigen Zeichnungen näher erläutert. In diesen zeigen:
- Fig. 1: einen Messerkopf in perspektivischer Darstellung mit einer der zugehörigen Schneidanordnungen in Explosionsdarstellung in einer ersten Ausführungsform,
- Fig. 2: einen Schneidplattenträger nach Fig. 1 im Teilschnitt in vergrößerter Darstellung,
- Fig. 3: eine Exzenterhülse nach Fig. 1 im Längsschnitt in vergrößerter Darstellung,
- Fig. 4: einen Schnitt A-B nach Fig. 3,
- Fig. 5: einen Messerkopf in perspektivischer Darstellung mit einer der zugehörigen Schneidanordnungen in Explosionsdarstellung in einer zweiten Ausführungsform.

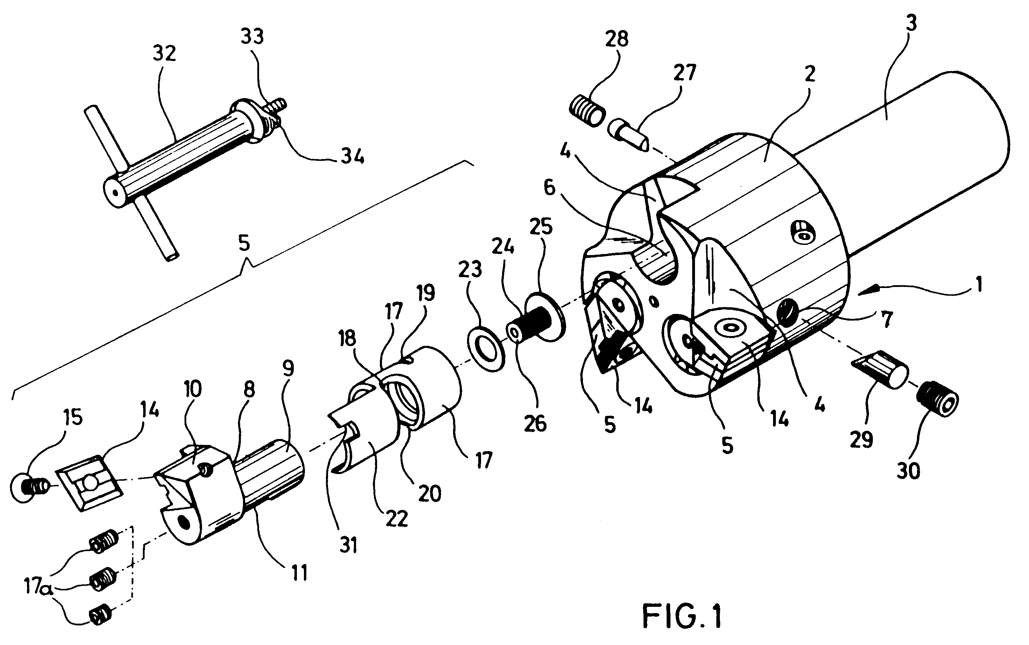

Fig. 1 zeigt in perspektivischer Darstellung einen Messerkopf 1 bestehend aus einem Grundkörper 2 und einer Maschinenaufnahme 3, wobei der Grundkörper 2 sich stirnseitig und radial nach außen öffnende Ausnehmungen 4 aufweist, in denen jeweils eine Schneidanordnung 5 aufgenommen ist. Hierfür beinhalten die Ausnehmungen 4 hier nicht näher gezeigte Grundbohrungen 6, die sich jeweils axial in den Grundkörper 2 hineinerstrecken und der Aufnahme der Schneidanordnungen 5 dienen, so daß die Schneidanordnungen 5 in den Grundkörper 2 des Messerkopfes 1 eingesetzt und aufgenommen werden können, und Planschneiden von Schneidplatten 14 der Schneidanordnungen 5 in fertig montiertem Zustand nahe einer vorderen Stirnflächenebene des Grundkörpers 2 angeordnet sind.

Exemplarisch für sämtliche Schneidanordnungen 5 ist eine Schneidanordnung 5 in Explosionsdarstellung gezeigt, während die beiden anderen Schneidanordnungen 5 sich in ihrem fertig montierten Zustand am Grundkörper 2 des Messerkopfes 1 befinden.

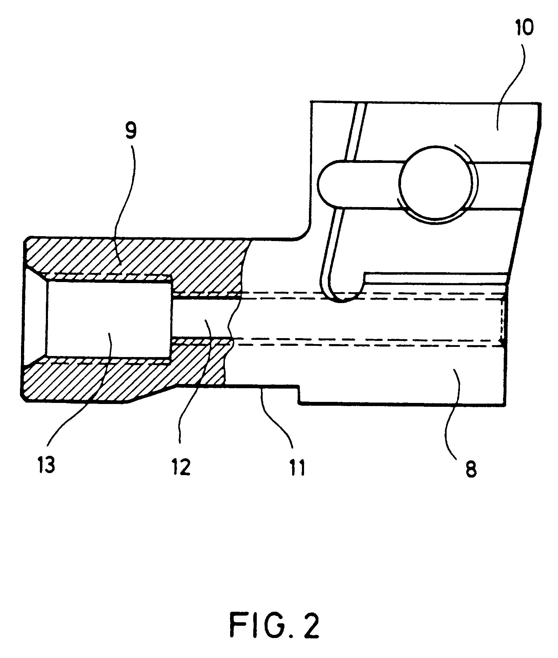

Die Schneidanordnung 5 weist einen Schneidplattenträger 8 auf, der im einzelnen in Fig. 2 dargestellt ist und einen axialen Führungsschaft 9 sowie eine sich an diesen an einem Ende des Schneidplattenträgers 8 anschließende Schneidplattenaufnahme 10 aufweist. In der ersten Ausführungsform wird die als Hartmetall-, PKD-oder Keramikplatte ausgeführte Schneidplatte durch eine Halteschraube 15 and der Schneidplattenaufnahme 10 befestigt. Der zusätzlichen Sicherung der Schneidplatte 14 gegenüber Flieh- bzw. Zentripedalkräften dient die Aufnahme der Schneidplatte 14 and der Schneidplattenaufnahme 10 über eine Nutverbindung.

Wie aus Fig. 2 ersichtlich ist, besitzt der Schneidplattenträger 8 eine sich zentral duch den Führungsschaft sowie den schneidplattenseitigen Kopfbereich hindurchziehende, axiale Gewindebohrung 12 sowie einen sich am Ende des Führungsschaftes 9 erweiternden Innengewindeabschnitt 13.

Wie nachfolgend noch genauer erläutert wird, dient der endseitige Innengewindeabschnitt 13 der Aufnahme einer Stellschraube 24 für die Axialverstellung des Schneidplattenträgers 8 gegenüber dem Grundkörper 2, während die Gewindebohrung 12 zum einen den Zugang eines Drehwerkzeuges zu der Stellschraube 24 zu deren Schraubbetätigung sowie andererseits die Aufnahme von Ausgleichsgewindestiften 17a für den Ausgleich möglicher Unwucht des Messerkopfes 1 dient.

Zur Bildung einer Radialverstelleinrichtung des Schneidplattenträgers 8 im Verhältnis zu dem Grundkörper 2 des Messerkopfes 1 ist dieser mit seinem Führungsschaft 9 in einer exzentrischen Innenbohrung 18 einer Exzenterhülse 17 in einem Spielpaßsitz aufgenommen, wobei die Exzenterhülse 17 unter Spielausgleich durch eine Tellerfeder 23 axial mittels eines Fixierbolzens 27 in dem Grundkörper 2 festgelegt ist und die Tellerfeder sich an einer Stirnfläche 21 der Exzenterhülse 17 sowie am Schraubenkopf 25 einer in den Innengewindeabschnitt 13 des Führungsschaftes 9 einschraubbaren Stellschraube 24 abstützt. Im fertig montierten Zustand liegt der Kopf 25 der Stellschraube 24 am Boden der Grundbohrung 6 auf.

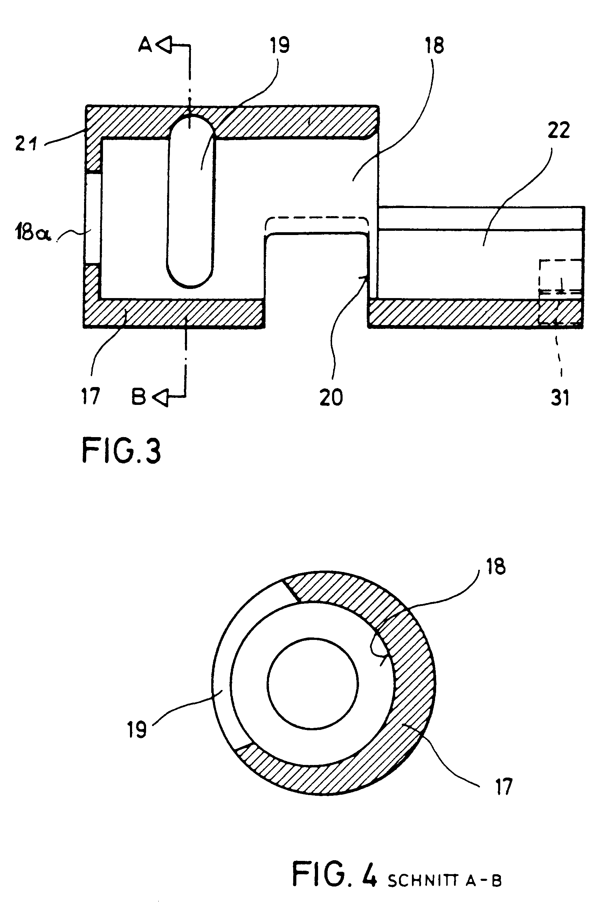

Die als Radialverstellbüchse fungierende Exzenterhülse 17 ist in den Figuren 3 und 4 im einzelnen dargestellt.

Wie aus den Figuren 1, 3 und 4 ersichtlich ist, besitzt die Exzenterhülse 17 eine exzentrisch zu ihrem Außenumfang verlaufende Innenbohrung 18 mit einer koaxialen Durchtrittsöffnung 18a in einer Stirnfläche 21 der Exzenterhülse 17. Ferner weist die Exzenterhülse 17 einen vorspringenden Lappen 22 mit einer stirnseitigen Eingriffsnut 31 auf. Schließlich besitzt die Exzenterhülse 17 axial und in Umfangsrichtung versetzt ausgenommene Schlitze 19, 20, die sich jeweils in Umfangsrichtung erstrecken.

Der Schlitz 19 dient der axialen Lagefixierung der Exzenterhülse 17 im Grundkörper 2 des Messerkopfes 1 mit Hilfe eines diesen radial durchsetzenden Fixierbolzens 27, der durch einen Gewindestift 28 gesichert ist. Zum Spielausgleich wird die Exzenterhülse 17 durch die Tellerfeder 23 gegen den Fixierbolzen 27 axial vorgespannt und die Exzenterhülse 17 ist in einem Spielpaßsitz in der in die zugehörige Ausnehmung 4 mündenden Grundbohrung 6 des Grundkörpers 2 aufgenommen.

Der weitere Schlitz 20 gestattet es einem Keilbolzen 29, der nach Einsetzen der Schneidanordnung 5 in den Grundkörper 2 mit Hilfe eines Gewindestiftes 30 radial in den Grundkörper 2 über eine die Grundbohrung schneidende Spannbohrung 7 eingesetzt ist, in direkten Spankontakt mit dem Führungsschaft 9 des Schneidplattenträgers 8 im Bereich einer Spannfläche 11 des Führungsschaftes 9 zu treten.

Bezüglich einer endgültigen Positionierung des Schneidplattenträgers 8 mit der Schneidplatte 14 am Grundkörper 2 des Messerkopfes 1 ist die Spannfläche 11 am Führungsschaft 9 derart angearbeitet und wird der Keilbolzen 29 so angesetzt, daß die Befestigung der gesamten Schneidanordnung 5 im Grundkörper 2 derart erfolgt, daß der Schneidplattenträger 8 mit der Exzenterhülse 17 in der Aufnahme-Grundbohrung 6 des Grundkörpers 2 gegen diesen im wesentlichen radial nach außen verspant wird, so daß rotationsbedingt auftretende Zentripedalkräfte nur zu einer noch festeren Anlage der Schneideinrichtung 5 am Grundkörper 2 in Spannrichtung führen und dynamische Belastungen des Messerkopfes 4 nicht zu einer Lageveränderung der im µm-Bereich eingestellten Schneidplatten 14 führen.

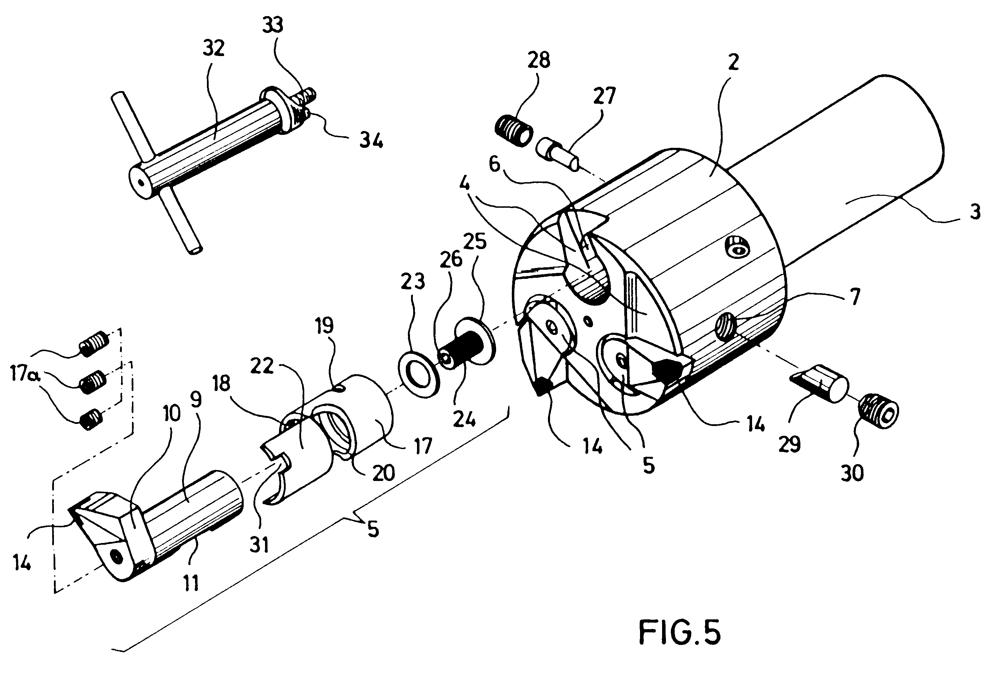

Fig. 5 zeigt in einer weiteren Ausführungsform der Erfindung anhand einer in Explosionsdarstellung gezeigten Schneidanordnung 5 die Verwendung eines insoweit gegenüber der Anordnung gemäß Fig. 1 veränderten Schneidplattenträgers 8, als dieser eine Schneidplattenaufnahme 10 mit eingelöteter Hartmetall- oder einer anderen Schneidstoffplatte 14 aufweist. Die Schneidplatte bzw. Schneide 14 bildet somit einen integralen Verbund mit dem Schneidplattenträger 8, wobei dies zur weiteren Erhöhung der Einstellgenauigkeit des Messerkopfes 1 beitragen kann. Im übrigen entspricht die Schneidanordnung 5 mit ihren zugehörigen Halte- und Verstellmitteln vollständig dem in Fig. 1 dargestellten Ausführungsbeispiel, wobei übereinsimmende Teile auch mit gleichen Bezugszeichen versehen sind und bezüglich ihres Aufbaues und ihrer Gestaltung auf die obigen Erläuterungen verwiesen wird.

Nachfolgend wird stellvertretend für sämtliche Schneidanordnungen 5 die Montage, Einstellung und Befestigung einer der Schneidanordnungen 5 des Messerkopfes 1 erläutert.

Zum Zwecke der mit hoher Genauigkeit axial und radial einstellbaren Befestigung der Schneidanordnung 5 im Grundkörper 2 des Messerkopfes 1 wird zunächst die Schneidanordnung 5 derart vormontiert, daß der Schneidplattenträger 8 mit an diesem befestigter Schneidplatte 14 mit seinem Führungsschaft 9 in die Innenbohrung 18 der Exzenterhülse 17 eingesetzt und unter Zwischenlage der Tellerfeder 23 die Stellschraube 24 in den Innengewindeabschnitt 13 des Führungsschaftes 9 eingeschraubt wird, so daß die gesamte Schneidanordnung 5 einen gemeinsam in die Ausnehmung 4 mit zugehöriger Grundbohrung des Grundkörpers 2 einführbaren Einsatz bildet. Die Stellschraube 25 wird zumindest soweit in den Innengewindeabschnitt 13 eingeschraubt, daß zwischen dem Schraubenkopf 25 der Stellschraube 24 und der Exzenterhülse 17 die Vorspannkraft der Tellerfeder 23 wirksam ist und die Exzenterhülse 17 vorzugsweise noch eine gewisse Axialbeweglichkeit in Richtung auf den Schraubenkopf 25 der Stellschraube 24 behält. Die Tiefe der Grundbohrung 6 des Grundkörpers 2 in der Ausnehmung 4 ist bezüglich der hier nicht gezeigten Radialbohrung für die Aufnahme des Fixierbolzens 27 so gestaltet, daß beim Einsetzen der vormontierten Schneidanordnung 5 , bzw. der Exzenterhülse 17 gegen die Vorspannkraft der Tellerfeder 23 der Schlitz 19 der Exzenterhülse 17 in fluchtende Ausrichtung mit der Radialbohrung zur Aufnahme des Fixierbolzens 27 gelangt und dieser in den Grundkörper 2 eingesetzt wird und in den Schlitz 19 der Exzenterhülse 17 eingreift, um somit die Exzenterhülse 17 axial durch die Tellerfeder 23 gegen den Fixierbolzen 27 vorgespannt in dem Grundkörper 2 axial festzulegen, wobei der Fixierbolzen 27 anschließend durch den Gewindestift 28 festgelegt und gesichert wird. Auf diese Weise erfolgt zugleich eine grundsätzliche Aufnahme und Festlegung der gesamten Schneidanordnung 5 im Grundkörper 2.

Zur Einstellung der Axialposition des Schneidplattenträgers 8 und damit der Schneidplatte 14 kann nunmehr ein Imbusschlüssel durch die axiale Gewindebohrung 12 des Schneidplattenträgers 8 hindurch in den Innensechskant 26 der Stellschraube 24 geführt werden und durch Rechts- oder Linksdrehung eine Axialverstellung des Schneidplattenträgers 8 gegenüber der Exzenterhülse 17 und gegenüber der Stirnfläche des Grundkörpers 2 erfolgen. Als axialer Stellbereich unter Wirkung einer Vorspannkraft steht ein Axialweg zur Verfügung, in dem die Federkraft der Tellerfeder 23 wirksam ist. Da wegen der Verschleißarmut der verwendeten Schneidstoffe eine axiale Nachstellung der Schneidanordnung im wesentlichen nur im µm-Bereich erforderlich ist, erweist sich dieser Einstellweg als vollständig ausreichend. Bezüglich der radialen Durchmessereinstellung des Messerkopfes 1 kann eine Radialverstellung des Schneidplattenträgers 8 nunmehr dadurch erfolgen, daß eine Drehverstellung der Exzenterhülse 17 relativ zu dem Schneidplattenträger 8 erfolgt. Zu diesem Zweck dient ein Spezialschlüssel 32 (Siehe Fig. 1 und 5), der mit einem gewindelosen Führungszapfen 33 in die Gewindebohrung 12 eingreift und mit einer Eingriffsnase 34 in Eingriff mit der Eingriffsnut 31 der Exzenterhülse 17 bringbar ist. Aufgrund der exzentrischen Lagerung des Schneidplattenträgers 8 in der Exzenterhülse 17 führt eine Drehverstellung desselben zu einer Radialbewegung des Schneidplattenträgers 8 und damit der zugehörigen Schneidplatte in Bezug auf den Grundkörper 2 des Messerkopfes 1. Infoge der sich in Umfangsrichtung erstreckenden Schlitze 19, 20 wird eine Verdrehung der Exzenterhülse 17 auch nicht durch den in Eingriff befindlichen Fixierbolzen 27 oder den in einer Vorbereitungsstellung zur Keilverspanung mit dem Führungsschaft 9 des Schneidplattenträgers 8 befindlichen Keilbolzens 29 behindert.Nach erfolgter Einstellung wird der Gewindestift 30 gegen den in einer losen Vorbereitungsstellung in der Spannbohrung 7 des Grundkörpers 2 befindlichen Keilbolzens 29 festgezogen, so daß dieser in Eingriff mit der Spannfläche 11 den Schneidplattenträger 8 und damit die gesamte Schneidanordnung 5 in der jeweiligen Aufnahme-Grundbohrung des Grundkörpers 2 gegen diesen verspannt. Die Verspannung erfolgt dabei so, daß eine radial nach außen gegen den Grundkörper wirksame Spannkraft erzeugt wird, um eine dynamische Beeinflussung bei Ratation des Messerkopfes mit einer hohen Umfangsgeschwindigkeit zur Realisierung der für den Zerspanungsprozess wünschenswerten hohen Schnittgeschwindigkeiten zu vermeiden.

In entsprechender Weise erfolgt die Einstellung der Schneidplatten 14 für die weiteren Schneidanordnungen 5, im vorliegenden Fall ist der Messerkopf 1 mit jeweils 3, um 120° versetzt angeordnete Schneidanordnungen 5 bestückt.

Auf diese Weise wird eine individuelle einfache und hochgenaue Einstellung jedes Schneidplattenträgers 8 des Messerkopfes 1 und damit auch eine unkomplizierte Nachjustierung der Schneidplatten bzw. Schneiden 14 desselben unter Berücksichtigung verschleißbedingter Abnützungen möglich. Aus Vereinfachnungsgründen ist die Anordnung der übrigen Gewindestifte, 28, 30, soweit sichtbar, für die bereits im montierten Zustand gezeigten Schneidanordnungen 5 nicht gezeigt.

Die axiale Festlegung der Exzenterhülsen 17 über die Fixierbolzen 27 gestattet es auch, den jeweiligen Schneidplattenträger 8 aus dem Grundkörper 2 zu entnehmen, wobei die zugehörige Exzenterhülse, Tellerfeder 23 und Stellschraube 24 in der jeweiligen Grundbohrung 6 mit der Stellschraube 24 in Anlage am Grund der Grundbohrung 6 verbleiben. Dies ermöglicht den schnellen und einfachen Austausch des Schneidplattenträgers 8, wenn dies erforderlich ist. Zum Unwuchtausgleich für den Messerkopf 1 können jeweils Unwuchtschrauben 17 unterschiedlicher Länge oder aus verschiedenem Material unterschiedlicher Dichte in die axiale Gewindebohrung 12 des jeweiligen Schneidplattenträgers 8 eingeschraubt und hier durch diese Gewindebohrung 12 auch jeweils nach außen verschlossen werden.

Gegebenenfalls kann die Erstmontage der Schneidanordnungen 5 am Grundkörper 2 des Messerkopfes 1 auch so erfolgen, daß abfolgend die Stellschraube 25, die Tellerfeder 23 und die Exzenterhülse 17 lose in die betreffende Grundbohrung eingesetzt und unter axialer Vorspannung der Tellerfeder 23 die Exzenterhülse 17 radial mit Hilfe des Fixierbolzens 27 und des Gewindestiftes 28 festgelegt wird, um dann anschließend den Schneidplattenträger 8 einzusetzen und diesen unter gleichzeitiger Axialeinstellung mit der Stellschraube 25 unter Betätigung der Stellschraube 24 über deren Innensechskant 26 zu verschrauben.

Die Erfindung ist selbstverständlich nicht auf die gezeigten Ausführungsbeispiele beschränkt, sondern kann im Rahmen der Patentansprüche insbesondere konstruktive Veränderungen in Bezug auf den Schneidplattenträger 8 und die Schneidplattenaufnahme 10 sowie z.B. in Bezug auf die Fixier- und Spananordnung 27, 28, 29, 30 aufweisen.

## Patentansprüche

1. Messerkopf mit einem im wesentlichen zylindrischen Grundkörper (2), der an seiner Stirnfläche eine Mehrzahl von stirnseitig und radial zugänglichen Ausnehmungen (4) zur Aufnahme jeweils eines axial und radial verstellbaren Schneidplattenträgers (8) mit zumindest je einer zugehörigen Schneidplatte (14) aufweist und der Schneidplattenträger (8) einen axialen Führungsschaft (9) sowie eine Schneidplattenaufnahme (10) aufweist und mittels einer radialen Spannvorrichtung (29, 30) arretierbar ist, **dadurch gekennzeichnet,** daß der Führungsschaft (9) in einer Exzenterbuchse (17) aufgenommen und mit dieser unter Federvorspannung durch eine den Schneidplattenträger (8) axial positionierende Stellschraube (24) zu einem vormontierbaren Einsatz in den Grundkörper (2) verbindbar ist, wobei die Exzenterhülse (17) Umfangsschlitze (19, 20) zum radialen Eingriff einer Fixiereinheit (27, 28) sowie der Spannvorrichtung (29, 30), die an einer Keilfläche (11) des Führungsschaftes (9) angreift, aufweist und die Exzenterhülse (17) eine stirnseitige Eingriffsnut (31) für eine Verdrehung zur Einstellung einer Radialposition des Schneidplattenträgers (8) aufweist.

2. Messerkopf nach Anspruch 1,
**dadurch gekennzeichnet,**
daß die Exzenterhülse (17) eine zu ihrer Mantelfläche exzentrische Innenbohrung (18) aufweist, in der der Führungsschaft (9) des Schneidplattenträgers (8) in einem Spielpaßsitz aufnehmbar ist, die Exzenterhülse (17) axial federnd im Grundkörper (2) vorspannbar ist und die Exzenterhülse (17) in einem Spielpaßsitz in einer Grundbohrung (6) des Grundkörpers (2) aufgenommen ist.

3. Messerkopf nach Anspruch 1,
**dadurch gekennzeichnet,**
daß der Schneidplattenträger (8) eine axiale Gewindebohrung (12) mit einem erweiterten Innengewindeabschnitt (13) an seinem der Schneidplattenaufnahme (10) gegenüberliegenden Ende aufweist, in den die axiale Stellschraube (24) einschraubbar ist, die sich unter Zwischenlage einer Tellerfeder (23) an einer Stirnfläche (21) der Exzenterhülse (17) abstützt.

4. Messerkopf nach Anspruch 3,
**dadurch gekennzeichnet,**
daß die Stellschraube (24) an ihrer Endfläche des Gewindeschaftes einen Innensechskant (26) aufweist.

5. Messerkopf nach zumindest einem der Ansprüche 1-4,
**dadurch gekennzeichnet,**
daß die Exzenterhülse (17) unter axialer Vorspannung mittels eines radial den Grundkörper (2) durchsetzenden, in den einen Schlitz (19) der Exzenterhülse (17) eingreifenden Fixierbolzens (27) axial in dem Grundkörper (2) fixiert ist.

6. Messerkopf nach Anspruch 1,
**dadurch gekennzeichnet,**
daß mit der angearbeiteten Keilfläche (11) zur Arretierung von Schneidplattenträger (8) und Exzenterhülse (17) in dem Grundkörper (2) ein den Grundkörper radial durchsetzender Keilbolzen (29) im Eingriff und der Schneidplattenträger (8) radial nach außen gegen den Grundkörper (2) verspannt ist.

7. Messerkopf nach Anspruch 1,
**dadurch gekennzeichnet,**
daß die Schneidplatte (14) über eine als Fliehkraftsicherung wirksame Nutverbindung mit der Schneidplattenaufnahme (10) des Schneidplattenträgers (8) verbunden und an der Schneidplattenaufnahme (10) durch eine Halteschraube (15) befestigt ist.

8. Messerkopf nach Anspruch 1,
**dadurch gekennzeichnet,**
daß die Schneidplatte eine mit der Schneidplattenaufnahme (10) verlötete Hartmetall- oder PKD-Platte ist.

9. Messerkopf nach Anspruch 1,
**dadurch gekennzeichnet,**
daß in den Schneidplattenträger (8) Unwucht-Ausgleichsschrauben (17) unterschiedlicher Masse einschraubbar sind.

## Claims

1. Cutter head with an essentially cylindrical main body (2) which comprises in its end face a plurality of recesses (4) accessible from the end face and radially, for receiving in each case an axially and radially adjustable carbide tip support (8), each with at least one associated carbide tip (14), and the carbide tip support (8) comprises an axial guide shaft (9) as well as a carbide tip holder (10) and can be locked by means of a radial clamping device (29, 30), characterised in that the guide shaft (9) is held in an eccentric bush (17) and can be connected thereto under spring bias by a set screw (24) which axially positions the carbide tip support (8), to form a preassembled insert in the main body (2), wherein the eccentric bush (17) comprises circumferential slots (19, 20) for radial engagement of a fixing unit (27, 28) as well as of the clamping device (29, 30) which engages a wedge surface (11) of the guide shaft (9), and the eccentric bush (17) comprises a contact groove (31) in the end face for rotation to adjust a radial position of the carbide tip support (8).

2. Cutter head according to claim 1, characterised in that the eccentric bush (17) comprises an internal bore (18) which is eccentric to its peripheral surface and in which the guide shaft (9) of the carbide tip support (8) can be held in a loose fit, the eccentric bush (17) can be spring biased axially in the main body (2) and the eccentric bush (17) is held in a loose fit in a main bore (6) of the main body (2).

3. Cutter head according to claim 1, characterised in that the carbide tip support (8) comprises an axial threaded bore (12) with a wider internal thread section (13) at its end opposite the carbide tip holder (10), into which can be screwed the axial set screw (24) which is supported with the interposition of a disc spring (23) on an end face (21) of the eccentric bush (17).

4. Cutter head according to claim 3, characterised in that the set screw (24) comprises a hexagon socket (26) in its end face of the threaded shank.

5. Cutter head according to one or more of claims 1-4, characterised in that the eccentric bush (17) is axially fixed in the main body under axial bias by means of a fixing bolt (27) which passes radially through the main body (2) and engages in one slot (19) of the eccentric bush (17).

6. Cutter head according to claim 1, characterised in that a linchpin (29) passing radially through the main body is in engagement with the wedge surface (11) formed, for locking the carbide tip support (8) and the eccentric bush (17) in the main body (2), and the carbide tip support (8) is biased radially outwards against the main body (2).

7. Cutter head according to claim 1, characterised in that the carbide tip (14) is connected by a keyed joint acting as a centrifugal force lock, to the carbide tip holder (10) of the carbide tip support (8) and attached to the carbide tip holder (10) by a retaining screw (15).

8. Cutter head according to claim 1, characterised in that the carbide tip is a hard metal or polycrystalline diamond plate soldered to the carbide tip holder (10).

9. Cutter head according to claim 1, characterised in that eccentric compensating screws (17) of different mass can be screwed into the carbide tip support (8).

## Revendications

1. Tête porte-lames comportant un corps de base (2), essentiellement cylindrique, qui, à sa surface frontale, présente une pluralité d'évidements (4), accessibles frontalement et radialement, pour recevoir, chacun, un porte-plaquettes de coupe (8) réglable axialement et radialement, avec au moins chaque fois une plaquette de coupe correspondante (14), le porte-plaquettes de coupe (8) présentant un fût de guidage axial (9) ainsi qu'un réceptacle (10) de plaquettes de coupe et pouvant se bloquer au moyen d'un dispositif de bridage radial (29, 30), caractérisée par le fait que le fût de guidage (9) est reçu dans un coussinet d'excentrique (17) et peut se relier avec celui-ci, sous précontrainte élastique, au moyen d'une vis réglante (24) qui positionne axialement le porte-plaquettes de coupe (8), pour donner un ensemble prémontable inséré dans le corps de base (2), la douille excentrique (17) présentant des fentes périphériques (19, 20) pour la venue en prise radiale d'un organe de fixation (27, 28) ainsi que du dispositif de bridage (29, 30) qui agit sur une surface de clavetage (11) du fût de guidage (9) et la douille excentrique (17) présentant une encoche frontale de prise (31) pour permettre sa rotation pour le réglage d'une position radiale du porte-plaquettes de coupe (8).

2. Tête porte-lames selon la revendication 1,
Caractérisée
par le fait que la douille excentrique (17) présente un alésage intérieur (18), excentré par rapport à sa surface périphérique, dans lequel le fût de guidage (9) du porte-plaquettes de coupe (8) peut se loger dans un siège à ajustement avec jeu, que la douille excentrique (17) peut être précontrainte élastiquement, dans le sens axial, dans le corps de base (2) et que la douille excentrée (17) est logée dans un siège à ajustement avec jeu dans un alésage de base (6) du corps de base (2).

3. Tête porte-lames selon la revendication 1,
caractérisée
par le fait que le porte-plaquettes de coupe (8) présente, à son extrémité opposée au logement (10) de la plaquette de coupe, un alésage taraudé axial (12) avec un tronçon élargi, fileté intérieurement (13) dans lequel peut se visser la vis réglante axiale (24) qui, avec l'interposition d'une rondelle conique (23) s'appuie contre une surface frontale (21) de la douille excentrique (17).

4. Tête porte-lames selon la revendication 3,
caractérisée
par le fait que la vis réglante (24) présente un six pans creux (26) à la surface d'extrémité de sa tige filetée.

5. Tête porte-lames selon au moins l'une des revendications 1-4
caractérisée
par le fait que la douille excentrique (17) est fixée dans le sens axial dans le corps de base (2) sous précontrainte axiale, au moyen d'une goupille de fixation (27) qui traverse radialement le corps de base (2) et vient en prise dans une fente (19) de la douille excentrique (17).

6. Tête porte-lames selon la revendicaiton 1,
caractérisée par le fait que, dans le corps de base (2), une clavette (29) qui traverse radialement le corps de base est bridée en prise avec la surface de clavetage (11) usinée, pour bloquer le porte-plaquettes de coupe (8) et la douille excentrique (17), et le porte-plaquettes de coupe est bridé contre le corps de base (2) radialement vers l'extérieur.

7. Tête porte-lames selon la revendication 1,
caractérisée
par le fait que la plaqutte de coupe (14) est reliée avec le réceptacle (10) de plaquettes de coupe du porte-plaquettes de coupe (8) au moyen d'une liaison de rainure agissant comme une sécurité à l'égard de la force centrifugre et que la plaquette de coupe est fixée au réceptacle (10) de plaquettes de coupe au moyen d'une vis de blocage (15).

8. Tête porte-lames selon la revendication 1,
caractérisée
par le fait que la plaquette de coupe est une plaquette en carbure ou une plaquette PKD brasée avec le réceptacle (10) de plaquettes de coupe.

9. Tête porte-lames selon la revendication 1,
caractérisée
par le fait que dans le porte-plaquettes de coupe (8) peuvent se visser des vis (17) d'équilibrage du balourd de différentes masses.
